# EUROPÄISCHE PATENTSCHRIFT

(11) **EP 3 705 458 B1**
(45) Veröffentlichungstag und Bekanntmachung des Hinweises auf die Patenterteilung: **25.10.2023**
(21) Anmeldenummer: 20020098.8
(22) Anmeldetag: 04.03.2020
(51) Int. Cl.: C02F 1/12, B01D 3/06, C02F 1/44, C02F 101/16

(54) **VERFAHREN ZUR AUFBEREITUNG AMMONIAKHALTIGER FLÜSSIGKEITEN UND ANLAGE ZUR DURCHFÜHRUNG DES VERFAHRENS**
METHOD FOR THE PRODUCTION OF LIQUIDS CONTAINING AMMONIA AND INSTALLATION FOR CARRYING OUT THE METHOD
PROCÉDÉ DE TRAITEMENT DE LIQUIDES CONTENANT L'AMMONIAQUE ET INSTALLATION DE MISE EN OEUVRE DU PROCÉDÉ

(30) Priorität: 04.03.2019 DE 102019105353
(43) Veröffentlichungstag der Anmeldung: 09.09.2020
(73) Patentinhaber: Steffen Hartmann Recyclingtechnologien GmbH, 06502 Thale/OT Allrode (DE)
(72) Erfinder: KUNTZE, Christoph, 38899 Stiege (DE)
(74) Vertreter: Patentanwälte Schuster, Müller & Partner mbB

(56) Entgegenhaltungen:
- EP-A1- 2 808 304
- EP-A2- 1 020 407
- EP-B1- 2 404 887

## Beschreibung

### Stand der Technik

Die Erfindung geht aus von einem Verfahren zur Aufbereitung ammoniakhaltiger Flüssigkeiten durch Eindampfen nach der Gattung des Oberbegriffs des Anspruchs 1, beispielsweise zur Aufbereitung von Gärresten aus Biogasanlagen, Deponiesickerwässern, von aus Umkehrosmoseanlagen stammenden Konzentraten u. a., und einer Anlage zur Durchführung des Verfahrens zur Aufbereitung ammoniakhaltiger Abwässer nach der Gattung des Oberbegriffs des Anspruchs 6.

Verfahren zur Aufbereitung ammoniakhaltiger Flüssigkeiten, beispielsweise Gärresten aus Biogasanlagen, sind hinreichend bekannt (siehe zum Beispiel die Dokumente EP 2 808 304 A1, EP 1 020 407 A2 und EP 2 404 887 B1). Dabei handelt es sich um nacheinander geschaltete Verdampferstufen, deren Austrag in der Regel als Wertstoff verwendet oder zu einem Wertstoff weiterverarbeitet wird. Die bei der Rückkühlung in den den Verdampfern nachgeschalteten Wärmetauschern gewonnene Kondensationswärme wird zur Beheizung der nachfolgenden Verdampferstufe verwendet. So sind ein Verfahren zur Düngemittelproduktion aus in Biogasanlagen anfallenden Gärresten sowie eine Einrichtung zur Realisierung des Verfahrens in einer mindestens zweistufigen Verdampferanlage bekannt. In einen ersten Verdampferkessel, der anfangs Wasser enthält, wird eine Ammoniumsalzlösung ohne Temperierung und temperiert mit einer definierten Temperatur aus einem ersten Wärmetauscher eingeleitet. In dem ersten Verdampferkessel stellt eine erste Vakuumerzeugungsstufe den zum Sieden und Aufkonzentrieren der Ammoniumsalzlösung erforderlichen Unterdruck bereit. Nachfolgend wird eine Kondensation des aus dem ersten Verdampferkessel austretenden und in einen zweiten Wärmetauscher eingeleiteten Sattdampfes durchgeführt. Das aus dem zweiten Wärmetauscher gewonnene Kondensat wird in einem der ersten Verdampferstufe zugeordneten Kondensatbehälter gesammelt und von dort aus dem Prozess genommen. In einem zweiten Verdampferkessel befindet sich Gärrestflüssigkeit. Der zweite Verdampferkessel wird mit einem Vakuum aus einer zweiten Vakuumerzeugungsstufe beaufschlagt. Die im zweiten Verdampferkessel befindliche Gärrestflüssigkeit wird auf niedrigerem Temperaturniveau sowie bei höherem Vakuum als im ersten Verdampferkessel zunehmend bis zur Auskristallisation am Kesselboden des zweiten Verdampferkessels eingedickt. Eine auf einem bestimmten Arbeitsniveau gehaltene Gärrestflüssigkeit wird fortlaufend im Kreislauf über den zweiten Wärmetauscher gedrückt und über eine Düse im zweiten Verdampferkessel versprüht. Der im zweiten Verdampferkessel anfallende Dampf kondensiert über einen im zweiten Verdampferkessel integrierten Rohrspiralwärmetauscher aus. Das dabei anfallende Kondensat wird in einem Kondensatbehälter gesammelt und zur Aufbereitung einer Pufferlösung mit einer anorganischen Säure zur Einstellung eines pH-Wertes von dauernd 6 vermischt und in einen Pufferbehälter geführt, der mit dem ersten Verdampferkessel I der ersten Verdampferstufe in Wirkverbindung steht. Zur Aufbereitung der Pufferlösung wird Schwefelsäure verwendet (EP 2 404 887 B1).

Der Nachteil dieser Verfahrensweise besteht darin, dass der Einsatz an Wärmeenergie trotz der Zweistufigkeit der Anlage immer noch verhältnismäßig hoch ist, nämlich genauso viel Wärmeenergie zur Behandlung von 1 m³ Produkt wie in einer einstufigen Anlage benötigt wird.

Bekannt ist ferner ein Verfahren und eine Anlage zur Behandlung von organisch hoch belasteten Abfällen, insbesondere von nach einer Fermentation verbleibenden Gär-Reststoffen, wobei zunächst eine Hygienisierung des Gär-Reststoffes und eine Fest-Flüssigtrennung in einem Dekanter erfolgt und die Dekanter-Flüssigkeit in einer zweistufigen Vakuumverdampfer-Anlage entwässert wird, so dass ein Verdampfer-Konzentrat und ein flüssiges Kondensat entsteht. Das Kondensat wird in einem Rückkühlwerk rückgekühlt und das das Rückkühlwerk verlassende Kondensat einer Umkehrosmose unterzogen. Die Dekanter-Flüssigkeit wird in der Verdampferanlage im Umlauf geführt WO 2009/012967 A1).

Der Nachteil dieses Verfahrens besteht darin, dass es kein ausreichend gereinigtes Wasser liefert. Sowohl das Permeat als auch das Konzentrat enthalten immer noch Ammoniak. Andererseits können beide Prozessstoffe keiner anderweitigen sinnvollen Nutzung, wie zum Beispiel der Herstellung von Düngemitteln, zugeführt werden, weil dazu wiederum der Stickstoffanteil der Prozessstoffe im Vergleich zum Wasseranteil zu gering ist.

Der Erfindung liegt somit die Aufgabe zugrunde, den Gesamtprozess der Aufbereitung ammoniakhaltiger Flüssigkeiten durch Eindampfen so zu gestalten, dass im Ergebnis der Aufbereitung eine ausreichend gereinigte Flüssigkeit vorliegt und der zweite entstandene Prozessstoff ohne weiteres einer sinnvollen Nutzung zugeführt werden kann. Zudem soll der Gesamtprozess der Aufbereitung eine höhere Energieeffizienz aufweisen.

Die Aufgabe wird erfindungsgemäß durch die kennzeichnenden Merkmale des Anspruchs 1 gelöst. Eine Anlage zur Durchführung des Verfahrens ist in Anspruch 6 beschrieben.

### Die Erfindung und ihre Vorteile

Erfindungsgemäß wird die Aufgabe durch die Merkmale des Anspruchs 1 gelöst. Das erfindungsgemäße Verfahren sieht vor, der ersten Verdampferstufe noch mindestens zwei Verdampferstufen in Reihe nachzuschalten und die ammoniakhaltige Flüssigkeit in die Verdampferkessel der Verdampferstufe II und III einzubringen, so dass sich in zwei Stufen ein und dasselbe Medium befindet. Das diese beiden Verdampferstufen verlassende Kondensat wird nach der an sich bekannten Neutralisation mit einer anorganischen Säure in einer Umkehrosmose-Einrichtung nachgereinigt. Der Prozess der Umkehrosmose bewirkt aber auch gleichzeitig eine Halbierung der Masse des aus den Verdampferstufen II und III austretenden Kondensats, wodurch die Massenbilanz in Bezug auf die in der Verdampferstufe I umgesetzte Masse korrigiert wird. Die Umkehrosmose erzeugt jeweils zu gleichen Masseteilen sauberes, nahezu ammoniakfreies Wasser als Permeat und Konzentrat. Das Konzentrat der Umkehrosmose besteht dabei aus Ammoniak, Wasser und einer anorganischen Säure, sodass hieraus in bekannter Weise durch chemische Umsetzung eine schwach angesäuerte Ammoniumsalzlösung zur Verfügung steht, die dem Verdampferkessel der ersten Verdampferstufe zugeführt wird.

Durch das erfindungsgemäße Verfahren wird auch eine Halbierung des Wärmeenergieeinsatzes erzielt. Durch den Einsatz der Umkehrosmose, welche das aus den Verdampferstufen II und III gewonnene Kondensat nach Ansäuerung aufkonzentriert, kann eine vierte Verdampferstufe eingespart werden. Mit Hilfe der Umkehrosmose wird die hydraulische Massenbilanz zwischen den drei Verdampferstufen hergestellt. Der Massestrom des aus den der ersten Verdampferstufe nachgelagerten Wärmetauschern entstandenen Kondensats durch die Umkehrosmose entsprechend der Kondensatmassenbilanz der Anlage aufgeteilt. Werden beispielsweise drei Verdampferstufen mit jeweils gleicher Leistung betrieben, so bewirkt die Umkehrosmose eine Halbierung des aus den Wärmetauschern der Verdampferstufen II und III gewonnenen Kondensats, so dass also die Masseanteile des die Umkehrosmose-Einrichtung verlassenden Kondensats und Konzentrats gleich groß sind. Wenn zum Beispiel jeder Verdampferstufe 510 Liter zugeführt und in jeder Stufe 500 Liter Kondensat erzeugt werden, dann ergibt sich ein Verhältnis von 1 zu 2 zwischen der ersten Stufe und den Stufen II und III, denn der Produkteingang der Stufe I setzt sich aus dem angesäuerten Kondensat der Stufen II und III zusammen. Durch die Aufkonzentration der Kondensate von Stufe II und III um 50% kann die Stufe I somit hydraulisch angepasst werden. Durch Ansäuern der Kondensate der Stufen II und III wird das enthaltene Ammoniak zu einem Ammoniumsalz umgewandelt. Dieses Salz verbleibt im Konzentrat der Umkehrosmose und befindet sich nicht im Permeat. Das Permeat hat eine sehr hohe Reinheit. Das erzeugte Konzentrat enthält die komplette Ammoniumfracht und gelangt zur weiteren Entwässerung in die Verdampferstufe I. Mit Hilfe von thermischen Trennverfahren, lässt sich eine wesentlich höhere Aufkonzentration von Salzen erreichen, als durch eine Membrantrenntechnik. In Stufe I kann das Ammoniumsalz bis zu seiner Löslichkeitsgrenze aufkonzentriert werden. Das reduziert den zu transportierenden Reststoff auf ein Minimum. Je nach Eingangsstoff in den Verdampfer ergeben sich für die weitere Nutzung des Ammoniumsalzes vielfältige Möglichkeiten.

Bei einer vorteilhaften Ausgestaltung der Erfindung wird zur Aufbereitung der Pufferlösung als anorganische Säure Schwefelsäure verwendet. Dadurch entsteht aus der ammoniakhaltigen Flüssigkeit als Konzentrat Ammoniumsulfat, das zur Herstellung eines Düngemittels verwendet werden kann. Es können aber auch andere anorganische Säuren zur Neutralisation des Kondensats verwendet werden.

Nach einer anderweitigen vorteilhaften Ausgestaltung der Erfindung wird die erwärmte ammoniakhaltige Flüssigkeit in die Verdampferkessel der mindestens zwei auf die erste Verdampferstufe folgenden Verdampferstufen mittels Düsen eingesprüht, was den Verdampfungsprozess im Unterdruck des Verdampferkessels begünstigt.

Nach einer ebenfalls vorteilhaften Ausgestaltung der Erfindung wird das aus der Umkehrosmose entstandene Konzentrat vor der Zuführung zum ersten Verdampferkessel mit enthärtetem Wasser verdünnt. Das bewirkt einen hydraulischen Ausgleich der Massenbilanz, sofern es durch Siedepunktverschiebung in den einzelnen Stufen zu Differenzen kommen sollte.

Bei einer optionalen Variante des erfindungsgemäßen Verfahrens wird das aus den der ersten Verdampferstufe nachgelagerten Verdampferstufen abgezogene Konzentrat bei Eignung einer Entwässerung, also einer Trennung der Flüssigphase von den festen Bestandteilen, unterzogen. Für diese Variante geeignet ist ein Konzentrat, bei dem Kristalle bereits ausfallen. Das Konzentrat wird über einen Klärer voreingedickt und einer Zentrifuge zugeführt, die die Feststoffe vom Konzentrat separiert. Die flüssige Phase aus der Zentrifuge und das Überstandswasser aus dem Klärer werden dem Verdampferkessel mindestens einer der der ersten Verdampferstufe nachgelagerten Verdampferstufen zugeführt. Das Endprodukt dieses Verfahrensschrittes ist ein stapelbarer Feststoff, eine Salzfracht. Sowohl die Lagerung, der Transport als auch die weitere Verwendung bzw. Entsorgung ist dadurch wesentlich effizienter, preiswerter und ökologisch sinnvoller.

Eine Anlage zur Durchführung des erfindungsgemäßen Verfahrens weist mindestens drei Verdampferstufen auf. Jede der Verdampferstufen besteht aus einem Verdampferkessel, einer in diesem einen Unterdruck erzeugenden Vakuumeinrichtung und einem nachgelagerten Wärmetauscher. Der Verdampferkessel der ersten Verdampferstufe steht mit einer Heizeinrichtung in Wirkverbindung. Der nachgelagerte Wärmetauscher jeder Verdampferstufe weist einen Kondensatabzug auf. Der Kühlkreislauf der zwischen den Verdampferstufen befindlichen Wärmetauscher ist mit dem Verdampferkessel der jeweils nachfolgenden Verdampferstufe und der Kühlkreislauf der letzten Verdampferstufe mit einer Kühleinrichtung verbunden. Der Kondensatabzug der Wärmetauscher ab der zweiten Verdampferstufe ist mit einem Kondensatsammelbehälter verbunden, der mit einer Säuredosiereinrichtung in Wirkverbindung steht. Erfindungsgemäß ist sein Auslauf über eine Umkehrosmose-Einrichtung mit dem Zulauf des Verdampferkessels der ersten Verdampferstufe verbunden. Die Verdampferkessel aller Verdampferstufen weisen einen Konzentrataustrag auf.

In einer vorteilhaften Ausgestaltung der Anlage ist zwischen dem Konzentratauslauf der Umkehrosmose-Einrichtung und dem Verdampferkessel der ersten Verdampferstufe ein Pufferbehälter angeordnet, der mit einer Verdünnungseinrichtung in Wirkverbindung steht. Die Verdünnung des Konzentrats ist prozessabhängig und ist nur dann erforderlich, wenn es prozessbedingt zwischen der Stufe I und den Stufen II und III zu Siedepunktverschiebungen kommt, welche hydraulisch ausgeglichen werden müssen. Da in Stufe I ein anderes Medium als in Stufe II und III vorhanden ist, ist das ein mögliches Szenario. Anstelle der Anpassung der Umkehrosmose an die zwischen den Stufen II und III und Stufe 1 vorherrschenden Verhältnisse, kann durch die Zuführung von enthärtetem Wasser schneller auf diese Situation reagiert werden.

Der Anlagenteil, der für die Durchführung der oben beschriebenen zweiten Variante des erfindungsgemäßen Verfahrens erforderlich ist, besteht aus einer Entwässerungseinrichtung, die mit dem Konzentratauslauf der der ersten Verdampferstufe nachgelagerten Verdampferstufen verbunden ist. Der Auslauf der Entwässerungseinrichtung für die Flüssigphase ist mit dem Zulauf des Verdampferkessels mindestens einer der der ersten Verdampferstufe nachgelagerten Verdampferstufen verbunden.

Vorteilhafterweise besteht die Entwässerungseinrichtung aus einem Klärer und einer Zentrifuge. Die Zentrifuge separiert die Feststoffe aus dem Konzentrat. Die in der Zentrifuge verbleibenden Feststoffe werden aus dieser entnommen und in einem Container zwischengelagert.

Weitere Vorteile und vorteilhafte Ausgestaltungen der Erfindung sind der nachfolgenden Beschreibung, den Ansprüchen und den Zeichnungen entnehmbar.

### Zeichnung

Ein bevorzugtes Ausführungsbeispiel des erfindungsgemäßen Gegenstands ist in der Zeichnung dargestellt und wird im Folgenden näher erläutert.

### Beschreibung der Ausführungsbeispiele

- Fig. 1: zeigt das Fließschema einer erfindungsgemäßen Anlage und
- Fig. 2: das Fließschema einer optionalen Variante einer solchen Anlage zur Aufbereitung ammoniakhaltiger Abwässer.

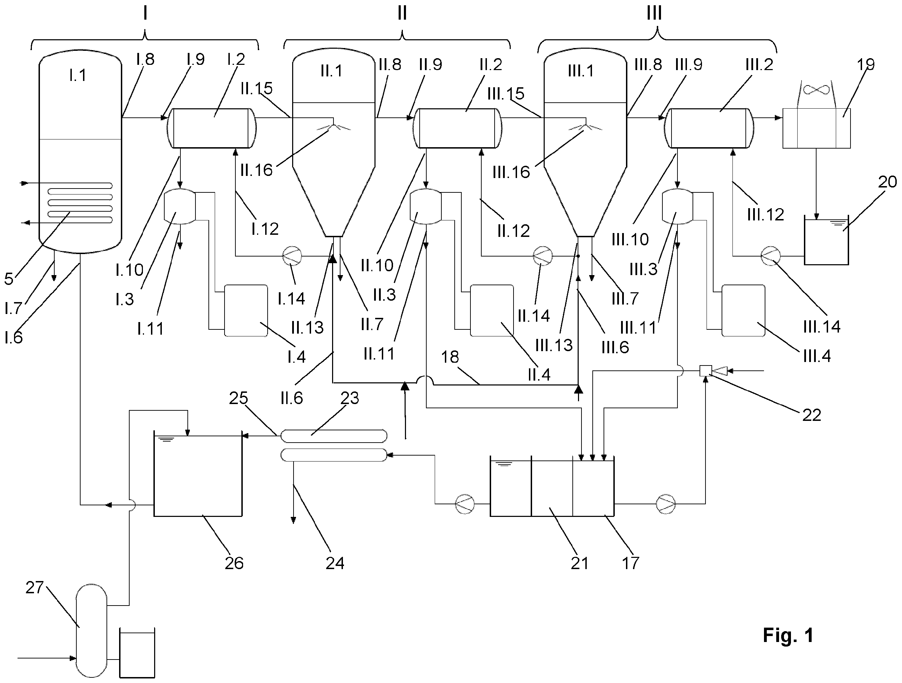

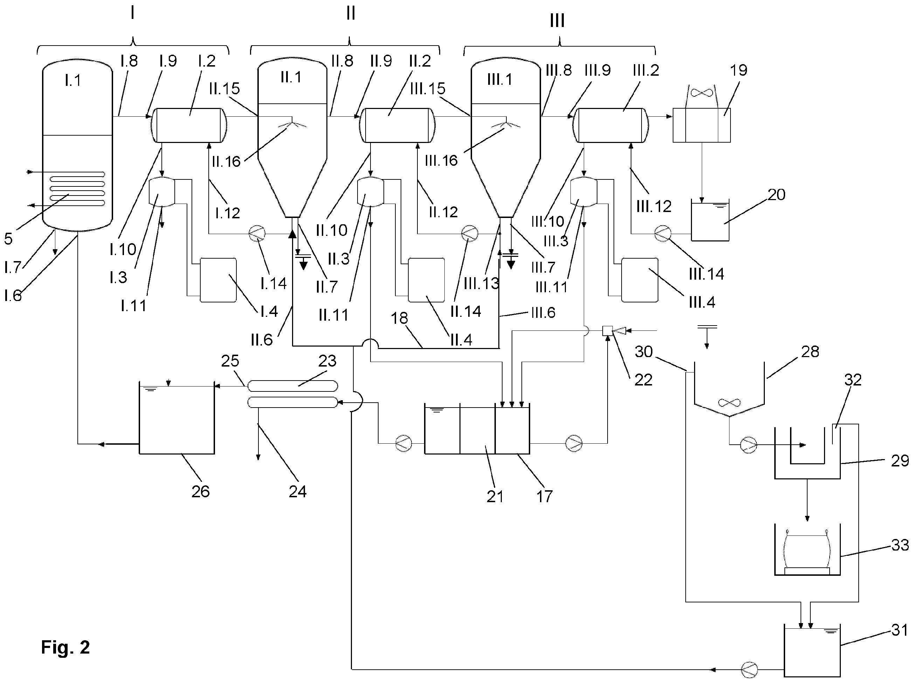

Wie aus den Fig. 1 und 2 zu erkennen, wurde für die Durchführung des erfindungsgemäßen Verfahrens im vorliegenden Beispiel eine dreistufige Anlage gewählt. Die Erfindung umfasst jedoch auch solche Anlagen, die mehr als drei Verdampferstufen aufweisen. Jede der drei aufeinanderfolgenden Verdampferstufen I, II und III besteht aus je einem Verdampferkessel 1, einem Wärmetauscher 2 mit zugehörigem Kondensatbehälter 3 und einer Vakuumeinrichtung 4, wobei zur Unterscheidung der einzelnen Bestandteile jedem Bestandteil die römische Zahl der jeweiligen Verdampferstufe I, II oder III vorangestellt wurde. Der besseren Übersicht halber wurden auch alle weiteren in der Beschreibung genannten Bauteile, die jede der eben genannten Hauptbestandteile der Verdampferstufen I, II oder III in gleicher Weise aufweist, mit derselben arabischen Zahl versehen, der jeweils die römische Zahl der jeweiligen Verdampferstufe I, II oder III, zu der der Hauptbestandteil gehört, vorangestellt wurde.

Der Verdampferkessel I.1 der ersten Verdampferstufe I wird durch eine Heizeinrichtung 5 beheizt, wobei sich diese im vorliegenden Beispiel im unteren Bereich des Verdampferkessels I.1 befindet. Am Boden des Verdampferkessels I.1 sind ein Zulauf I.6 und ein Konzentrataustrag I.7 angeordnet. Als Heizeinrichtung für den Verdampferkessel I.1 kann auch ein externer Wärmetauscher dienen, in dem die zu erwärmende Flüssigkeit beispielsweise mittels eines aus der Abwärme eines Blockheizkraftwerkes gewonnenen Wärmeträgers erwärmt wird. In dem Fall wird die Flüssigkeit über Düsen in den Verdampferkessel I.1 eingesprüht. Im oberen Bereich des Verdampferkessels I.1, dem Dom, ist ein Brüdenaustritt I.8 angeordnet, der mit einem Brüdeneintritt I.9 eines Wärmetauschers I.2 der ersten Verdampferstufe I verbunden ist. Der Wärmetauscher I.2 weist einen Kondensatauslauf I.10 auf, der in einen Kondensatbehälter I.3 der ersten Verdampferstufe I mündet. An den Kondensatbehälter I.3 ist eine Vakuumeinrichtung I.4 angeschlossen, die einen einstellbaren Unterdruck in dem Verdampferkessel I.1 erzeugt. Der Kondensatbehälter I.3 ist an seinem Boden mit einem Kondensatabzug I.11 versehen.

Der Kühlkreislauf I.12 des Wärmetauschers I.2 steht mit dem Verdampferkessel II.1 der zweiten Verdampferstufe II derart in Wirkverbindung, dass ein am Boden des Verdampferkessels II.1 angeordneter Flüssigkeitsauslauf II.13 über eine Pumpe I.14 mit dem Kühlmitteleintritt des Wärmetauschers I.2 und dessen Kühlmittelaustritt mit einem im oberen Bereich des Verdampferkessels II.1 angeordneten Flüssigkeitseintritt II.15 verbunden ist. An den Flüssigkeitseintritt II.15 schließt sich eine Sprühdüse II.16 an. Oberhalb dieser Sprühdüse II.16 befindet sich der Brüdenaustritt II.8, der mit dem Brüdeneintritt II.9 des Wärmetauschers II.2 der zweiten Verdampferstufe II verbunden ist. Auch dieser Wärmetauscher II.2 weist einen mit einem Kondensatbehälter II.3 verbundenen Kondensatauslauf II.10 und einen mit dem Verdampferkessel III.1 der dritten Verdampferstufe III in Wirkverbindung stehenden Kühlkreislauf II.12 auf, wobei auch hier, wie bereits bei der Beschreibung der Verdampferstufe I ausgeführt, der Kühlmittelaustritt des Kühlkreislaufs II.12 mit dem Flüssigkeitseintritt III.15 des Verdampferkessels III.1 und der Flüssigkeitsauslauf III.13 des Verdampferkessels III.1 mit dem Kühlmitteleintritt des Kühlkreislaufs II.12 verbunden ist. Ebenfalls ist an den Kondensatbehälter II.3 eine Vakuumeinrichtung II.4 angeschlossen, die einen einstellbaren Unterdruck in dem Verdampferkessel II.1 erzeugt. Der Kondensatbehälter II.3 ist an seinem Boden mit einem Kondensatabzug II.11 versehen, der mit einem Kondensatsammelbehälter 17 verbunden ist. Adäquat zu dem Verdampferkessel I.1 weist auch der Verdampferkessel II.1 an seinem Boden einen Zulauf II.6 für die aufzubereitende ammoniakhaltige Flüssigkeit und einen Konzentrataustrag II.7 auf. Der Zulauf II.6 befindet sich an dem mit dem Flüssigkeitsauslauf II.13 des Verdampferkessels II.1 verbundenen Teil des Kühlkreislaufes I.12.

Die im Wärmetauscher II.2 aufgeheizte Flüssigkeit wird in gleicher Weise wie bei dem Verdampferkessel II.1 beschrieben über eine Sprühdüse III.16 in den Verdampferkessel III.1 eingebracht. An dem mit dem Flüssigkeitsauslauf III.13 des Verdampferkessels III.1 verbundenen Teil des Kühlkreislaufes II.12 ist ein Zulauf III.6 für die aufzubereitende ammoniakhaltige Flüssigkeit vorgesehen. Der Zulauf III.6 ist über eine Verbindungsleitung 18 mit dem Zulauf II.6 des Verdampferkessels II.1 verbunden, über die Letzterer mit ammoniakhaltiger Flüssigkeit versorgt wird. Die Zuführung für die aufzubereitende ammoniakhaltige Flüssigkeit zu den beiden Verdampferkesseln II.1 und III.1 kann beispielsweise über die Verbindungsleitung 18 erfolgen, was in Fig. 1 durch die beiden, auf die Verbindungsleitung 18 gerichteten Pfeile kenntlich gemacht ist.

In adäquater Weise zu den zuvor beschriebenen Verdampferstufen I und II ist der Brüdenaustritt III.8 des Verdampferkessels III.1 mit dem Wärmetauscher III.2 der Verdampferstufe III verbunden. Der Wärmetauscher III.2 weist ebenfalls einen Kondensatauslauf III.10 auf, der mit einem Kondensatbehälter III.3 verbunden ist. Ebenfalls ist an den Kondensatbehälter III.3 eine Vakuumeinrichtung III.4 angeschlossen, die einen einstellbaren Unterdruck in dem Verdampferkessel III.1 erzeugt. Der Kondensatbehälter III.3 ist an seinem Boden mit einem Kondensatabzug III.11 versehen, der mit dem Kondensatsammelbehälter 17 verbunden ist. Adäquat zu dem Verdampferkessel II.1 weist auch der Verdampferkessel III.1 an seinem Boden einen Konzentrataustrag III.7 auf.

Im Unterschied zu den Wärmetauschern I.2 und II.2 der vorhergehenden Verdampferstufen I und II ist der Kühlkreislauf III.12 über einen Kühler, im vorliegenden Beispiel einen Kühlturm 19 geführt, dessen nicht verdampfende Kühlflüssigkeit in einer Kühlturm-Vorlage 20 gesammelt und über eine Pumpe III.14 dem Wärmetauscher III.2 wieder zugeführt wird.

Der Kondensatsammelbehälter 17 besteht im vorliegenden Beispiel aus drei Kammern, von denen die mittlere Kammer eine Neutralisationskammer 21 ist. Das Kondensat aus den Kondensatbehältern II.3 und III.3 gelangt in die der Neutralisationskammer 21 vorgelagerten Kammer, deren Ein- und Ausgang mit einer Säuredosiervorrichtung 22 verbunden ist. Der Ausgang der der Neutralisationskammer nachgelagerten Kammer ist mit einer Umkehrosmose-Einrichtung 23 verbunden, der einen Permeat-Auslauf 24 und einen Konzentrataustrag 25 aufweist. Das Permeat wird an der Stelle aus dem Prozess genommen und in einem hier nicht dargestellten Behälter aufgefangen oder, sofern es die Anforderungen eines einleitbaren Abwassers erfüllt, in einen Vorfluter eingeleitet. Der Konzentrataustrag 25 ist mit einem Pufferbehälter 26 verbunden, der an eine Wasserzuführung 27 angeschlossen und dessen Ausgang mit dem am Boden des Verdampferkessels I.1 der Verdampferstufe I angeordneten Zulauf I.6 verbunden ist. Die Wasserzuführung 27 muss ggf. mit einer Enthärtungseinrichtung in Wirkverbindung stehen.

Fig. 2 zeigt eine optionale Variante der Anlage zur Aufbereitung des aus den Verdampferstufen II und III anfallenden Konzentrats. Bei dieser Variante ist der jeweilige Konzentrataustrag II.7 und/oder III.7 der Verdampferkessel II.1 und/oder III.1 mit einem Klärer 28 verbunden, dessen am Boden befindlicher Auslauf zu einer Zentrifuge 29 geführt ist. Im oberen Bereich des Klärers 28 befindet sich ein Überlauf 30, der in einen Sammelbehälter 31 mündet. In diesen Sammelbehälter 31 ist auch der Flüssigkeitsauslauf 32 der Zentrifuge 29 geleitet. Der Auslauf des Sammelbehälters 31 ist jeweils über deren Zuläufe II.6 und III.6 mit den Verdampferkesseln II.1 und III.1 verbunden. Die in der Zentrifuge 29 zurückbleibenden Feststoffanteile werden in einen Feststoffbehälter 33 entleert.

Nachfolgend wird das in der zuvor beschriebenen Anlage ablaufende Verfahren zur Aufbereitung der ammoniakhaltigen Flüssigkeit näher beschrieben.

Beim Urstart der Anlage befindet sich in dem Verdampferkessel I.1 üblicherweise Wasser und in den beiden nachfolgenden Verdampferkesseln II.1 und III.1 die ammoniakhaltige Flüssigkeit, wobei diese über deren Zuläufe II.6 und III.6 eingebracht wird. Das Verfahren wird nachfolgend für eine bereits angefahrene Anlage beschrieben. Dann nämlich befindet sich in dem Verdampferkessel I.1 bereits eine Ammoniumsalzlösung, die über den Zulauf I.6 in den Verdampferkessel I.1 gelangt. Diese wird mittels der Heizeinrichtung 5 bis zum Sieden erhitzt. Über die Vakuumeinrichtung I.4 wird in dem Verdampferkessel I.1 ein definierter, zum Sieden und Aufkonzentrieren der Ammoniumsalzlösung erforderlicher Unterdruck erzeugt. Der Brüden verlässt über den Brüdenaustritt I.8 den Verdampferkessel I.1 und gelangt über den Brüdeneintritt I.9 in den Wärmetauscher I.2, dessen Kühlkreislauf I.12 mit kalter Ammoniumsalzlösung aus dem Verdampferkessel II.1 versorgt wird. Dabei wird die ammoniakhaltige Flüssigkeit mittels der Pumpe I.14 fortlaufend im Kreislauf über den Wärmetauscher I.2 gedrückt.

Die bei der Kondensation im Wärmetauscher 1.2 entstehende, von der ammoniakhaltigen Flüssigkeit aus dem Verdampferkessel II.1 aufgenommene Abwärme wird nun zur Beheizung des Verdampferkessels II.1 genutzt, in welchem die ammoniakhaltige Flüssigkeit auf einem niedrigeren Temperaturniveau und bei höherem Unterdruck als im Verdampferkessel I.1 zunehmend im unteren Bereich des Verdampferkessel II.1 eingedickt wird. Die Flüssigkeit wird in dem Verdampferkessel II.1 fortwährend auf einem bestimmten Arbeitsniveau gehalten. Der Unterdruck wird über die Vakuumeinrichtung II.4 in dem Verdampferkessel II.1 eingestellt. Die durch die heißen Brüden aus dem Verdampferkessel I.1 erwärmte Flüssigkeit gelangt über den Flüssigkeitseintritt II.15 in den Verdampferkessel II.1, in dem sie über die Sprühdüse II.16 versprüht wird.

Das aus dem Wärmetauscher I.2 gewonnene Kondensat wird in dem der ersten Verdampferstufe I zugeordneten Kondensatbehälter I.3 gesammelt und von dort aus dem Prozess genommen. Das hier erzeugte Kondensat ist nahezu ammoniakfrei, was eines der gewünschten Ziele des Verfahrens ist. Die in dem Verdampferkessel I.1 erzeugte Ammoniumsalzlösung kann bis zur Löslichkeitsgrenze erzeugt werden. Die sich im Lauf des Verfahrens am Kesselboden des Verdampferkessels I.1 der ersten Verdampferstufe I kontinuierlich zunehmend aufkonzentrierende Ammoniumsalzlösung (Konzentrat) wird von dort über dessen Konzentrataustrag I.7 nach außen ausgetragen.

Der im Verdampferkessel II.1 anfallende Brüden verlässt diesen über den Brüdenaustritt II.8 und gelangt über den Brüdeneintritt in den Wärmetauscher II.2, kondensiert dort und gibt dabei seine Kondensationsenergie an die sich im Kühlkreislauf II.12 des Wärmetauschers II.2, über die Pumpe II.14 ebenfalls im Kreislauf geführte kalte ammoniakhaltige Flüssigkeit aus dem Verdampferkessel III.1 ab. Die Verdampfung geschieht auf einem niedrigeren Temperaturniveau sowie höheren Unterdruck als im Verdampferkessel II.1. Siedetemperatur und Unterdruck werden über die Vakuumeinrichtung II.4 eingestellt. Die nunmehr erwärmte ammoniakhaltige Flüssigkeit gelangt über den Flüssigkeitseintritt III.15 in den Verdampferkessel III.1 und wird ebenfalls über eine Sprühdüse III.16 zerstäubt.

Das aus dem Wärmetauscher II.2 gewonnene, Wasser und Ammoniak enthaltende Kondensat wird in dem der zweiten Verdampferstufe II zugeordneten Kondensatbehälter II.3 gesammelt und gelangt von dort aus über seinen Kondensatabzug II.11 zur Aufbereitung einer mit einer Säure, im vorliegenden Beispiel Schwefelsäure, vermischten Pufferlösung in den Kondensatsammelbehälter 17. Die sich in dem Verdampferkessel II.1 aufkonzentrierende ammoniakhaltige Flüssigkeit wird über dessen Konzentrataustrag 11.7 dem Prozess entnommen.

In dem Verdampferkessel III.1 läuft der gleiche Vorgang ab wie in dem Verdampferkessel II.1. Auch hier erfolgt die Verdampfung unter einem noch niedrigeren Temperaturniveau bei gleichzeitig noch größerem Unterdruck als in dem Verdampferkessel II.1. Der in dem Verdampferkessel III.1 benötigte Unterdruck wird durch die der dritten Verdampferstufe III zugeordnete Vakuumeinrichtung III.4 erzeugt. Die Vakuumeinrichtungen I.4 bis III.4 stellen also ein immer höheres Vakuum ein, so dass die Verdampfungs- und Eindickungsvorgänge auch bei Temperaturen unter 80° C erfolgen können. Der in dem Verdampferkessel III.1 entstehende Brüden verlässt den Verdampferkessel III.1 über den Brüdenaustritt III.8 und gelangt über den Brüdeneintritt III.9 in den Wärmetauscher III.2. Die hier entstehende Kondensationswärme wird über dessen Kühlkreislauf III.12 entweder über einen geeigneten Trocken- oder Nasskühler an die Umgebung abgegeben oder zu Heizzwecken genutzt. Im vorliegenden Beispiel wird sie an einen Kühlturm 19 mit einer nachgeschalteten Kühlturm-Vorlage 20 abgegeben. Das Kühlmedium wird über die Pumpe III.14 im Kreislauf geführt. Das in dem Verdampferkessel III.1 anfallende Konzentrat wird über dessen Konzentrataustrag III.7 dem Prozess entnommen.

Das in dem Wärmetauscher III.2 anfallende Kondensat enthält ebenfalls Wasser und Ammoniak und wird in dem der dritten Verdampferstufe III zugeordneten Kondensatbehältern III.3 gesammelt und über dessen Kondensatabzug III.11 zur Aufbereitung einer mit einer anorganischen Säure, im vorliegenden Beispiel Schwefelsäure, vermischten Pufferlösung in den Kondensatsammelbehälter 17 geführt. Der Kondensatsammelbehälter 17 weist drei Kammern auf, von denen die mittlere als Neutralisationskammer 21 dient. In der Neutralisationskammer wird unter Zugabe der anorganischen Säure ein pH-Wert eingestellt und eine hochverdünnte Salzlösung erzeugt, um Stickstoffverbindungen zu stabilisieren und das flüchtige Ammoniak in der Lösung zu binden. Die Zuführung und Dosierung der Schwefelsäure erfolgt über die Säuredosiervorrichtung 22, die wiederum auch von der in dem Kondensatsammelbehälter aufbereiteten Pufferlösung gespeist wird. Von der letzten Kammer gelangt die Pufferlösung in die Umkehrosmose-Einrichtung 23. Die Umkehrosmose hat die Aufgabe, die Kondensatmenge aus den Verdampferstufen II und III zu halbieren. Sie trennt die hochverdünnte Salzlösung auf. Das dabei entstehende Permeat ist nahezu ammoniakfrei und wird dem Prozess über den Permeat-Auslauf 24 entnommen, was ein weiteres gewünschtes Ziel der Erfindung war. Das ebenfalls bei dem Vorgang der Umkehrosmose entstehende Konzentrat gelangt über einen Konzentratabzug in einen Pufferbehälter 26, welcher mit dem Zulauf I.6 des ersten Verdampferkessels I.1 der ersten Verdampferstufe I in Wirkverbindung steht. Das Konzentrat der Umkehrosmose besteht dabei aus Ammoniak, Wasser und Schwefelsäure, sodass hieraus in bekannter Weise durch chemische Umsetzung eine Ammoniumsulfatlösung zur Verfügung steht, die zur weiteren Aufkonzentration im Verdampferkessel I diesem zugeführt wird. Bei Abweichungen in der Konzentration kann durch Zuführung von enthärtetem Wasser aus der Wasserzuführung 27 in den Pufferbehälter ein Ausgleich erfolgen.

Bei einer alternativen Verfahrensvariante wird die Flüssigphase des aus den Verdampferkesseln II.1 und III.1 der Verdampferstufen II und III abgezogenen Konzen-trats, d. h. der aufkonzentrierten ammoniakhaltigen Flüssigkeit, von den festen Bestandteilen getrennt. Hierzu wird das Konzentrat zunächst in dem Klärer 28 eingedickt und die festen Bestandteile der Zentrifuge 29 zugeführt. Die aus dem Überlauf 30 des Klärers 28 ablaufende flüssige Phase gelangt dabei in einen Sammelbehälter 31. Die aus dem Flüssigkeitsauslauf 32 der Zentrifuge 29 austretende flüssige Phase gelangt ebenfalls in den Sammelbehälter 31. Die Flüssigkeit wird wieder der Eindampfungsanlage zugeführt, und zwar bevorzugt den Verdampferkesseln II.1 oder III.1 der Verdampferstufen II oder III. Die in der Zentrifuge 29 zurückbleibenden Feststoffe werden aus dieser ausgetragen und in dem Feststoffbehälter 33 zwischengelagert.

**Bezugszahlenliste**

| | | | |
|---|---|---|---|
| I | Erste Verdampferstufe | 28 | Klärer |
| II | Zweite Verdampferstufe | 29 | Zentrifuge |
| III | Dritte Verdampferstufe | 30 | Überlauf |
| | | 31 | Sammelbehälter |
| 1 | Verdampferkessel | 32 | Flüssigkeitsauslauf |
| 2 | Wärmetauscher | 33 | Feststoffbehälter |
| 3 | Kondensatbehälter | | |
| 4 | Vakuumeinrichtung | | |
| 5 | Heizeinrichtung | | |
| 6 | Zulauf | | |
| 7 | Konzentrataustrag | | |
| 8 | Brüdenaustritt | | |
| 9 | Brüdeneintritt | | |
| 10 | Kondensatauslauf | | |
| 11 | Kondensatabzug | | |
| 12 | Kühlkreislauf | | |
| 13 | Flüssigkeitsauslauf | | |
| 14 | Pumpe | | |
| 15 | Flüssigkeitseintritt | | |
| 16 | Sprühdüse | | |
| 17 | Kondensatsammelbehälter | | |
| 18 | Verbindungsleitung | | |
| 19 | Kühlturm | | |
| 20 | Kühlturm-Vorlage | | |
| 21 | Neutralisationskammer | | |
| 22 | Säuredosiervorrichtung | | |
| 23 | Umkehrosmose-Einrichtung | | |
| 24 | Permeat-Auslauf | | |
| 25 | Konzentrataustrag | | |
| 26 | Pufferbehälter | | |
| 27 | Wasserzuführung | | |

## Patentansprüche

1. Verfahren zur Aufbereitung ammoniakhaltiger Flüssigkeiten, in einer mehrstufigen Verdampferanlage, wobei jede Stufe der Verdampferanlage, nachfolgend Verdampferstufe genannt, aus einem Verdampferkessel, einer in diesem einen Unterdruck erzeugenden Vakuumeinrichtung und einem Wärmetauscher besteht, und wobei
- in den mit einer Heizeinrichtung (5) in Wirkverbindung stehenden Verdampferkessel (I.1) der ersten Verdampferstufe (I) eine Ammoniumsalzlösung über einen Zulauf (I.6) eingeleitet wird, die aus dem Kondensat mindestens einer der Wärmetauscher (II.2) der nachfolgenden Verdampferstufen (II) unter Zumischung einer anorganischen Säure zu dem Kondensat gewonnen wird,
- in dem Verdampferkessel (II.1) mindestens einer zweiten Verdampferstufe (II), in dem sich die ammoniakhaltige Flüssigkeit befindet, diese mittels der Kondensationswärme des Wärmetauschers (I.2) der jeweils vorgelagerten Verdampferstufe (I) auf einem niedrigeren Temperaturniveau jedoch bei höherem Vakuum als im jeweils vorgelagerten Verdampferkessel (I.1) erwärmt wird,
- das ab der zweiten Verdampferstufe (II) anfallende Kondensat in einem Kondensatbehälter (II.3) gesammelt und zur Aufbereitung einer Pufferlösung mit einer anorganischen Säure zur Einstellung eines pH-Wertes kleiner 7 vermischt wird und
- das sich am Boden der mindestens zwei Verdampferkessel (I.1, II.1) ansammelnde Konzentrat zur weiteren Aufbereitung oder Entsorgung abgezogen wird, **dadurch gekennzeichnet,**
- **dass** die ammoniakhaltige Flüssigkeit in die Verdampferkessel (II.1, III.1) von mindestens zwei auf die erste Verdampferstufe (I) folgende, in Reihe nacheinander angeordnete Verdampferstufen (II, III) eingegeben wird,
- **dass** die aus dem Kondensat der Wärmetauscher (II.2, III.2) dieser nachfolgenden Verdampferstufen (II, III) nach Vermischung mit der anorganischen Säure gewonnene Pufferlösung einer Umkehrosmose unterzogen wird, in deren Folge zu gleichen Masseteilen ein ammoniakfreies Permeat und ein Ammoniumsalz als Konzentrat entsteht und
- **dass** das aus der Umkehrosmose entstandene Konzentrat dem Verdampferkessel (I.1) der ersten Verdampferstufe (I) zugeführt wird.

2. Verfahren nach Anspruch 1,
**dadurch gekennzeichnet,**
**dass** zur Aufbereitung der Pufferlösung als anorganische Säure Schwefelsäure verwendet wird.

3. Verfahren nach Anspruch 1 oder 2,
**dadurch gekennzeichnet,**
**dass** die erwärmte ammoniakhaltige Flüssigkeit in die Verdampferkessel (11.1, 111.1) der mindestens zwei auf die erste Verdampferstufe (I) folgenden Verdampferstufen (II, III) mittels Düsen (16) eingesprüht wird.

4. Verfahren nach Anspruch 1,
**dadurch gekennzeichnet,**
**dass** das aus der Umkehrosmose entstandene Konzentrat vor der Zuführung zum Verdampferkessel (I.1) der ersten Verdampferstufe (I) mit enthärtetem Wasser verdünnt wird.

5. Verfahren nach Anspruch 1,
**dadurch gekennzeichnet,**
**dass** das aus den der ersten Verdampferstufe (I) nachgelagerten Verdampferstufen (II, III) abgezogene Konzentrat einer Trennung der Flüssigphase von den festen Bestandteilen unterzogen und die Flüssigphase dem Verdampferkessel (II.1, III.1) mindestens einer der der ersten Verdampferstufe (I) nachgelagerten Verdampferstufen (II, III) zugeführt wird.

6. Anlage zur Aufbereitung ammoniakhaltiger Flüssigkeiten, in einer mehrstufigen Verdampferanlage, wobei jede Stufe der Verdampferanlage aus einem Verdampferkessel (I.1, II.1, III.1), einer in diesem einen Unterdruck erzeugenden Vakuumeinrichtung (I.4, II.4, III.4) und einem nachgelagerten Wärmetauscher (I.2, II.2, III.2) besteht, und wobei
- der Verdampferkessel (I.1) der ersten Verdampferstufe (I) mit einer Heizeinrichtung (5) in Wirkverbindung steht,
- der nachgelagerte Wärmetauscher (I.2, II.2, III.2) jeder Verdampferstufe (I, II, III) einen Kondensatauslauf (I.10, II.10, III.10) aufweist, der Kühlkreislauf (I.12, II.12) der zwischen den Verdampferstufen (I, II) befindlichen Wärmetauscher (I.2, II.2) mit dem Verdampferkessel (II.2, III.2) der jeweils nachfolgenden Verdampferstufe (II, III) und der Kühlkreislauf (III.12) der letzten Verdampferstufe (III) mit einer Kühleinrichtung (19, 20) verbunden ist,
- der Kondensatauslauf (II.10, III.10) der Wärmetauscher (II.2, III.2) ab der zweiten Verdampferstufe (II, III) mit einem Kondensatbehälter (II.3, III.3) verbunden ist, dessen Kondensatabzug (II.11, III.11) jeweils in einen Kondensatsammelbehälter (17) mündet, der mit einer Säuredosiervorrichtung (22) in Wirkverbindung steht, und der Auslauf des Kondensatsammelbehälters (17) mit dem Zulauf (I.6) des Verdampferkessels (I.1) der ersten Verdampferstufe (I) verbunden ist und wobei
- die Verdampferkessel (I.1, II.1, III.1) aller Verdampferstufen (I, II, III) einen Konzentrataustrag (I.7, II.7, III.7) aufweisen,
**dadurch gekennzeichnet,**
- **dass** auf die erste Verdampferstufe (I) folgend mindestens zwei weitere Verdampferstufen (II, III) in Reihe nacheinander angeordnet sind und
- **dass** der Auslauf des Kondensatsammelbehälters (17) mit einer Umkehrosmose-Einrichtung (23), die so konzipiert ist, dass gleiche Masseteile Permeat und Konzentrat entstehen, verbunden ist, dessen Konzentrataustrag (25) mit dem Zulauf (I.6) des Verdampferkessels (I.1) der ersten Verdampferstufe (I) verbunden ist.

7. Anlage nach Anspruch 6,
**dadurch gekennzeichnet,**
**dass** der Konzentrataustrag (25) der Umkehrosmose-Einrichtung (23) über einen Pufferbehälter (26), der mit einer Verdünnungseinrichtung in Wirkverbindung steht, mit dem Zulauf (I.6) des Verdampferkessels (I.1) der ersten Verdampferstufe (I) verbunden ist.

8. Anlage nach Anspruch 6,
**dadurch gekennzeichnet,**
**dass** der Konzentrataustrag (II.7, III.7) der der ersten Verdampferstufe (I) nachgelagerten Verdampferstufen (II, III) mit einer Entwässerungseinrichtung verbunden ist und der Auslauf der Entwässerungseinrichtung für die Flüssigphase mit dem Zulauf (II.6; III.6) des Verdampferkessels (II.1, III.1) einer der der ersten Verdampferstufe (I) nachgelagerten Verdampferstufen (II, III) verbunden ist.

9. Anlage nach Anspruch 8,
**dadurch gekennzeichnet,**
**dass** die Entwässerungseinrichtung aus einem Klärer (28) und einer Zentrifuge (29) besteht.

## Claims

1. A method of processing ammonia-containing liquids in a multi-stage evaporator system, wherein each stage of the evaporator system, referred to as evaporator stage hereinafter, consists of an evaporator vessel, a vacuum device producing negative pressure in said vessel, and a heat exchanger, and wherein
- an ammonium salt solution obtained from the condensate of at least one of the heat exchangers (II.2) of the subsequent evaporator stages (II) by the addition of an inorganic acid is introduced, via an inlet (I.6), into the evaporator vessel (I.1) of the first evaporator stage (I) which is operatively connected to a heating device (5),
- in the evaporator vessel (II.1) of at least one second evaporator stage (II) which holds the ammonia-containing liquid, the latter is heated, by means of the condensation heat of the heat exchanger (I.2) of the respective upstream evaporator stage (I), to a lower temperature level, yet at a higher vacuum degree, than in the respective upstream evaporator vessel (I.1),
- beginning at the second evaporator stage (II), the condensate produced is collected in a condensate container (II.3) and is mixed with an inorganic acid for setting a pH value to be inferior to 7 in order to prepare a buffer solution, and
- the concentrate accumulating at the bottom of the at least two evaporator vessels (I.1, II.1) is removed for further treatment of for disposal,
**characterised in that**
- the ammonia-containing liquid is introduced into the evaporator vessels (II.1, III.1) of at least two evaporator stages (II, III) arranged in series downstream of the first evaporator stage (I),
- the buffer solution obtained from the condensate of the heat exchangers (II.2, III.2) of said downstream evaporator stages (II, III) and mixed with said inorganic acid is subjected to reverse osmosis, resulting in the creation of an ammonia-free permeate and an ammonium salt as a concentrate in equal parts by mass, and
- the concentrate obtained from said reverse osmosis is supplied to the evaporator vessel (I.1) of the first evaporator stage (I).

2. The method as claimed in claim 1,
**characterised in that**
the inorganic acid used for preparing the buffer solution is sulphuric acid.

3. The method as claimed in claim 1 or 2
**characterised in that**
the heated ammonia-containing liquid is injected into the evaporator vessels (II.1, III.1) of the at least two evaporator stages (II, III) arranged downstream of the first evaporator stage (I) by means of nozzles (16).

4. The method as claimed in claim 1,
**characterised in that**
the concentrate obtained from said reverse osmosis is diluted with softened water before being supplied to the evaporator vessel (I.1) of the first evaporator stage (I).

5. The method as claimed in claim 1,
**characterised in that**
the concentrate extracted from the evaporator stages (II, III) arranged downstream of the evaporator stage (I) is subjected to a separation of the liquid phase from the solid components and **in that** said liquid phase is supplied to the evaporator vessel(s) (II.1, III.1) of at least one of the evaporator stages (II, III) arranged downstream of the first evaporator stage (I).

6. A system for processing ammonia-containing liquids in a multi-stage evaporator system, wherein each stage of the evaporator system consists of an evaporator vessel (I.1, II.1, III.1), a vacuum device (I.4, II.4, III.4) producing negative pressure in said vessel, and a heat exchanger (I.2, II.2, III.2) arranged downstream thereof, and wherein
- the evaporator vessel (I.1) of the first evaporator stage (I) is operatively connected to a heating device (5),
- the heat exchanger (I.2, II.2, III.2) arranged downstream of each evaporator stage (I), II, III) has a condensate outlet (I.10, II.10, III.10), the cooling circuit (I.12, II.12) of the heat exchangers (I.2, II.2) arranged between den evaporator stages (I, II) is connected to the evaporator vessels (II.2, III.2) of the respective downstream evaporator stages (II, III), and the cooling circuit (III.12) of the last evaporator stage (III) is connected to a cooling device (19, 20),
- the condensate outlet (II.10, III.10) of the heat exchangers (II.2, III.2), beginning with the second evaporator stage, (II, III), is connected to a condensate container (II.3, III.3) whose condensate drain (II.11, III.11) leads to a condensate collector (17) which is operatively connected to an acid dosing device (22), and the outlet of the condensate collector (17) is connected to the inlet (I.6) of the evaporator vessel (I.1) of the first evaporator stage (I), and wherein
- the evaporator vessels (I.1, II.1, III.1) of all evaporator stages (I, II, III) have a concentrate discharge port (I.7, II.7, III.7),
**characterised in that**
- at least two further evaporator stages (II, III) are arranged in series after one another downstream of the first evaporator stage (I),
- the outlet of the condensate collector (17) is connected to a reverse osmosis device (23) which is conceived so as to produce equal parts by mass of permeate and concentrate and whose concentrate discharge port (25) is connected to the inlet (I.6) of the evaporator vessel (I.1) of the first evaporator stage (I).

7. The system as claimed in claim 6,
**characterised in that**
the concentrate discharge port (25) of the reverse osmosis device (23) is connected to the inlet (I.6) of the evaporator vessel (I.1) of the first evaporator stage (I) via a buffer container (26) which is operatively connected to a dilution device.

8. The system as claimed in claim 6,
**characterised in that**
the concentrate discharge port (II.7, III.7) of the evaporator stages (II, III) arranged downstream of the evaporator stage (I) is connected to a dewatering device and the outlet of the dewatering device for the liquid phase is connected to the inlet (II.6; III.6) of the evaporator vessel (II.1, III.1) of one of the evaporator stages (II, III) arranged downstream of the first evaporator stage (I).

9. The system as claimed in claim 8,
**characterised in that**
the dewatering device consists of a water clarifier (28) and of a centrifugal separator (29).

## Revendications

1. Procédé destiné à traiter des liquides contenant de l'ammoniac dans une installation d'évaporation à plusieurs étages, chaque étage de l'installation d'évaporation, appelé ci-après étage d'évaporation, étant constitué d'une chaudière d'évaporation, d'un dispositif sous vide générant dans celle-ci une dépression donnée et d'un échangeur thermique, et
- dans la chaudière d'évaporation (I.1) du premier étage d'évaporation (I) qui coopère avec un dispositif de chauffage (5) étant introduite, par l'intermédiaire d'une arrivée (I.6), une solution de sel d'ammonium qui est obtenue à partir du condensat d'au moins un des échangeurs thermiques (II.2) des étages d'évaporation suivants (II) par addition d'un acide inorganique audit condensat,
- dans la chaudière d'évaporation (II.1) d'au moins un deuxième étage d'évaporation (II) dans laquelle se trouve le liquide contenant de l'ammoniac, celui-ci étant réchauffé, au moyen de la chaleur de condensation de l'échangeur thermique (I.2) de l'étage d'évaporation (I) situé respectivement en amont, à un niveau de température plus bas mais à un vide plus élevé que dans la chaudière d'évaporation (I.1) située respectivement en amont,
- le condensat produit à partir du deuxième étage d'évaporation (II) étant recueilli dans un collecteur de condensat (II.3) et, en vue de préparer une solution tampon, étant mélangé à un acide inorganique pour obtenir une valeur de ph inférieure à 7 et
- le concentré qui s'accumule sur le fond desdits au moins deux chaudières d'évaporation (I.1, II.1) étant évacué en vue d'un traitement ultérieur ou de son élimination,
**caractérisé en ce que**
- le liquide contenant de l'ammoniac est introduit dans les chaudières d'évaporation (II.1, III.1) d'au moins deux étages d'évaporation (II, III) disposés en série l'un à la suite de l'autre qui succèdent au premier étage d'évaporation (I),
- la solution tampon obtenue à partir du condensat des échangeurs thermiques (II.2, III.2) desdits étages d'évaporation suivants (II, III) après mélange avec l'acide inorganique est soumise à une osmose inverse à la suite de laquelle est obtenu comme concentré un perméat sans ammoniac et un sel d'ammonium à parties en poids égales, et
- le concentré issu de l'osmose inverse est amené à la chaudière d'évaporation (I.1) du premier étage d'évaporation (I).

2. Procédé selon la revendication 1, **caractérisé en ce que**
de l'acide sulfurique est utilisé en tant qu'acide inorganique pour préparer la solution tampon.

3. Procédé selon la revendication 1 ou 2,
**caractérisé en ce que**
une fois réchauffé, le liquide contenant de l'ammoniac est pulvérisé, au moyen de buses (16), dans les chaudières d'évaporation (II.1, III.1) desdits au moins deux étages d'évaporation (II, III) succédant au premier étage d'évaporation (I).

4. Procédé selon la revendication 1,
**caractérisé en ce que**
le concentré issu de l'osmose inverse est dilué avec de l'eau adoucie avant d'être amené à la chaudière d'évaporation (I.1) du premier étage d'évaporation (I).

5. Procédé selon la revendication 1,
**caractérisé en ce que**
le concentré évacué des étages d'évaporation (II, III) situés en aval du premier étage d'évaporation (I) est soumis à une séparation de la phase liquide des constituants solides et la phase liquide est amenée à la chaudière d'évaporation (II.1, III.1) d'au moins un des étages d'évaporation (II, III) situés en aval du premier étage d'évaporation (I).

6. Installation destinée à traiter des liquides contenant de l'ammoniac dans une installation d'évaporation à plusieurs étages, chaque étage de l'installation d'évaporation étant constitué d'une chaudière d'évaporation (I.1, II.1, III.1), d'un dispositif sous vide (I.4, II.4, III.4) générant dans celle-ci une dépression donnée et d'un échangeur thermique (I.2, II.2, III.2), et
- la chaudière d'évaporation (I.1) du premier étage d'évaporation (I) coopérant avec un dispositif de chauffage (5),
- l'échangeur thermique (I.2, II.2, III.2) de chaque étage d'évaporation (I, II, III) qui est situé en aval présentant une sortie de condensat (I.10, II.10, III.10), le circuit de refroidissement (I.12, II.12) des échangeurs thermiques (I.2, II.2) situés entre les étages d'évaporation (I, II) étant relié à la chaudière d'évaporation (II.2, III.2) de l'étage d'évaporation (II, III) respectif suivant, et le circuit de refroidissement (III.12) du dernier étage d'évaporation (III) étant relié à un dispositif de refroidissement (19, 20),
- la sortie de condensat (II.10, III.10) des échangeurs thermiques (II.2, III.2) étant reliée, à partir du deuxième étage d'évaporation (II, III), à un collecteur de condensat (II.3, III.3) dont l'évacuation de condensat (II.11, III.11) débouche respectivement dans un réservoir collecteur de condensat (17) qui coopère avec un dispositif de dosage d'acide (22), et la sortie du réservoir collecteur de condensat (17) étant reliée à l'arrivée (I.6) de la chaudière d'évaporation (I.1) du premier étage d'évaporation (I), et
- les chaudières d'évaporation (I.1, II.1, III.1) de tous les étages d'évaporation (I, II, III) présentant une sortie d'évacuation de concentré (I.7, II.7, III.7),
**caractérisée en ce que**
- après le premier étage d'évaporation (I), au moins deux autres étages d'évaporation (II, III) sont disposés en série l'un à la suite de l'autre, et
- la sortie du réservoir collecteur de condensat (17) est reliée à un dispositif d'osmose inverse (23) qui est conçu pour obtenir des parties en poids égales de perméat et de concentré et dont la sortie d'évacuation de concentré (25) est reliée à l'arrivée (I.6) de la chaudière d'évaporation (I.1) du premier étage d'évaporation (I).

7. Installation selon la revendication 6,
**caractérisée en ce que**
la sortie d'évacuation de concentré (25) du dispositif d'osmose inverse (23) est reliée, par l'intermédiaire d'un réservoir tampon (26) qui coopère avec un dispositif de dilution, à l'arrivée (I.6) de la chaudière d'évaporation (I.1) du premier étage d'évaporation (I).

8. Installation selon la revendication 6,
**caractérisée en ce que**
la sortie d'évacuation de concentré (II.7, III.7) des étages d'évaporation (II, III) situés en aval du premier étage d'évaporation (I) est reliée à un dispositif de déshydratation et la sortie du dispositif de déshydratation pour la phase liquide est reliée à l'arrivée (II.6; III.6) de la chaudière d'évaporation (II.1, III.1) d'un des étages d'évaporation (II, III) situés en aval du premier étage d'évaporation (I).

9. Installation selon la revendication 8,
**caractérisée en ce que**
le dispositif de déshydratation est constitué d'un clarificateur (28) et d'une centrifugeuse (29).
